# Europäisches Patentamt
## European Patent Office
## Office européen des brevets

(19)

(11) Veröffentlichungsnummer: **0 001 816**
**B1**

(12) **EUROPÄISCHE PATENTSCHRIFT**

(45) Veröffentlichungstag der Patentschrift: **17.03.82**

(21) Anmeldenummer: **78101252.1**

(22) Anmeldetag: **28.10.78**

(51) Int. Cl.³: **C 04 B 17/03,**
**C 04 B 31/12, E 21 D 11/00**

(54) Aushärtender Werkstoff und Verfahren zu seiner Herstellung.

(30) Priorität: **29.10.77 DE 2748648**

(43) Veröffentlichungstag der Anmeldung:
**16.05.79 Patentblatt 79/10**

(45) Bekanntmachung des Hinweises auf die Patenterteilung:
**17.03.82 Patentblatt 82/11**

(84) Benannte Vertragsstaaten:
**BE FR GB**

(56) Entgegenhaltungen:
**DE - A - 2 405 223**
**DE - C - 563 359**
**FR - A - 958 489**
**FR - A - 1 161 019**
**GB - A - 189 276**

(73) Patentinhaber: **Saarbergwerke Aktiengesellschaft**
**Postfach 1030**
**Trierer Strasse 1 D-6600 Saarbrücken (DE)**

(72) Erfinder: **Klinkner, Hans-Guido, Dr.-Ing.**
**Grubenweg 20**
**D-6670 St. Ingbert (DE)**
Erfinder: **Culmann, Günter**
**Zum Kuhfeld 1**
**D-6680 Neunkirchen-Haus Furpach (DE)**

Courier Press, Leamington Spa, England.

**0 001 816**

Aushärtender Werkstoff und Verfahren zu seiner Herstellung

Die Erfindung betrifft einen aushärtenden Werkstoff, insbesondere für den Einsatz im Bergbau, der aus einer Mischung aus Magnesiumoxid, Magnesiumchlorid, Wasser und einem Zuschlagstoff besteht, sowie ein Verfahren zu seiner Herstellung.

Zur Verfestigung von Kohle und/oder Gestein im Bergbau ist bereits ein aushärtender Werkstoff bekannt geworden, der aus einer Mischung aus Magnesiumoxid, Magnesiumchlorid, Wasser und Bentonit als Zuschlagstoff besteht (Deutsche Patentschrift 2204281). Dabei beträgt der Anteil des Bentonits an dem Werkstoff etwa 10 bis 25 Gew. %.

Dieser bekannte Werkstoff besitzt zwar gute Erhärtungs- und Festigkeitseigenschaften, doch ist seine Herstellung mit relativ hohen Kosten verbunden. Insbesondere die zur Verfügungstellung des Bentonits erweist sich als verhältnismäßig aufwendig. Aus diesem Grunde ist der bekannte Werkstoff für den Einsatz in größeren Mengen, beispielsweise zum Errichten frühfester Dämme (Abschlußdämme, Streckenbegleitdämme) oder bei Verwendung als Hinterfüllmaterial im Untertagebergbau relativ unwirtschaftlich.

Der Erfindung liegt die Aufgabe zugrunde, einen Werkstoff zu entwickeln, der billig herstellbar ist und dennoch schnell aushärtet und gute Festigkeitseigenschaften aufweist.

Die Aufgabe wird erfindungsgemäß dadurch gelöst, daß bei der eingangs genannten Mischung als Zuschlagstoff gebrochene Wasch- und/oder Ortsberge in einer Menge von 50 bis 90 Gew.-% vorgesehen sind, daß der Anteil der Wasch- und/oder Ortsberge mindestens 5 Gew.-% mehlfeines Korn mit einer Korngröße unter 0,09 mm aufweist, daß die Magnesiumchloridlösung eine Dichte von über 1,22 g/cm³ aufweist, daß der Anteil der Magnesiumchloridlösung zwischen 5 und 25 Gew.-% und der Anteil des Magnesiumoxids ebenfalls zwischen 5 und 25 Gew.-% beträgt.

Es hat sich überraschenderweise gezeigt, daß der erfindungsgemäße Werkstoff relativ schnell aushärtet und eine hohe Druckfestigkeit aufweist. Bereits nach etwa 1 Tag Aushärtezeit ist nahezu die vollständige Endfestigkeit des Werkstoffes erreicht. Auch erweist sich die Herstellung des Werkstoffs als kostengünstig, da die im Steinkohlenbergbau als Abfallprodukt anfallenden Wasch- und/oder Ortsberge zum Einsatz kommen. Somit kann der erfindungsgemäße Werkstoff neben der Verfestigung von Kohle und/oder Gestein insbesondere auch in größeren Mengen zum Errichten frühfester Dämme im Untertagebergbau bzw. als Hinterfüllmaterial verwendet werden.

Unter Umständen können der Ausgangsmischung des Werkstoffs noch geringe Mengen Bentonit, beispielsweise bis zu 10 Gew. %, zugesetzt werden. Die zusätzliche Zumischung von Bentonit erweist sich insbesondere dann als zweckmäßig, wenn das Ausbreitmaß des Wirkstoffes kurzfristig erniedrigt, d.h. die Viskosität erhöht oder wenn die Abbindezeit des Werkstoffes weiter verkürzt werden soll.

Zur Herstellung des erfindungsgemäßen Werkstoffes wird zunächst eine Dispersion aus Magnesiumchlorid, Magnesiumoxid und Wasser bzw. eine Dispersion aus Magnesiumchlorid-Lösung und Magnesit und ggf. Bentonit hergestellt und dieser dann Wasch- und/oder Ortsberge zugesetzt. Dabei besteht die Dispersion in der Regel aus etwa 45—55 Gew. % Magnesiumchlorid-Lösung, aus etwa 40 bis 55 Gew. % gebranntem Magnesit und ggf. bis zu 10 Gew. % Bentonit.

Bei der Herstellung des Werkstoffes, insbesondere wenn dieser im Untertagebergbau eingesetzt werden soll, ist es aus Gründen der Transportkostenersparnis vorteilhaft, die Wasch-bzw. die Ortsberge -gegebenenfalls auch Mischungen derselben der vorbereiteten Dispersion erst an Ort und Stelle, also erst unter Tage zuzumischen.

Der erfindungsgemäße Werkstoff läßt sich gut verarbeiten. Sein Ausbreitmaß ist so niedrig, daß bei seinem Einsatz zum Verfüllen von Hohlräumen oder Errichten von Dämmen keine aufwendigen Verschalungen erforderlich sind. So genügt z.B. als streckenseitige Begrenzung leichtes Verschalmaterial, z.B. Papier-Draht-Gewebe.

Zur weiteren Erläuterung der Erfindung dienen die im folgenden dargestellten Versuche.

In den Versuchen wurde eine Dispersion aus konzentrierter Magnesiumchlorid-Lösung, Magnesit und teilweise auch Bentonit mit aufbereiteten Waschbergen vermischt. Gemessen wurde sowohl das Ausbreitmaß in cm als auch die Würfeldruckfestigkeit bei verschiedenen Aushärtezeiten. Dabei ist das Ausbreitmaß ein Maß für die Bearbeitungsfähigkeit des Werkstoffs und die Würfeldruckfestigkeit ein Maß für die nach der Aushärtung erreichte Festigkeit des Werkstoffes.

Bei den Versuchen wurden Waschberge folgender Zusammensetzung verwendet:

0001 816

| | | |
|---|---|---|
| $SiO_2$ | — | 46,9 Gew. % |
| $Al_2O_3$ | — | 26,5 Gew. % |
| FeO | — | 3,9 Gew. % |
| $FeS_2$ | — | 1,4 Gew. % |
| MnO | — | 0,1 Gew. % |
| CaO | — | 0,4 Gew. % |
| MgO | — | 1,8 Gew. % |
| $K_2O$ | — | 3,6 Gew. % |
| $Na_2O$ | — | 0,5 Gew. % |
| Kohle | — | ca. 10 bis 12 Gew. % |
| Hydratwasser | — | ca. 3 bis 5 Gew. % |

Die Kornverteilung der Waschberge war die folgende:

| Maschenweite (mm) | Siebdurchgang (Gew. %) |
|---|---|
| 0,063 | 10,5 |
| 0,09 | 11,4 |
| 0,75 | 14,8 |
| 1,00 | 27,4 |
| 3,15 | 42,5 |
| 6,3 | 58,8 |
| 10,0 | 69,6 |
| 16,0 | 81,2 |
| 25,0 | 89,4 |
| 90,0 | 100,0 |

Es wurden die in der folgenden Tabelle dargestellten Ergebnisse erzielt:

3

TABELLE

| Versuch Nr. | Feuchte Waschberge (Gew. %) | Konzentr. $MgCl_2$-Lösung (Gew. %) | gebrannter Magnesit (Gew. %) | Bentonit (Gew. %) | Ausbreitmaß $\beta$ (cm) | Würfeldruckfestigkeit (kp /cm³) nach Lagerung bei Zimmertemperatur nach: | | |
|---|---|---|---|---|---|---|---|---|
| | | | | | | 1 Tag | 7 Tagen | 28 Tagen |
| 1 | 90,6 | 5,1 | 4,3 | — | 20 | — | 11 | 16 |
| 2 | 85,6 | 7,7 | 6,4 | — | 20,5 | 50 | 71 | 76,5 |
| 3 | 81,1 | 10,3 | 8,6 | — | 24,5 | 133 | 172 | 172 |
| 4 | 71,4 | 15,6 | 13,0 | — | 42 | 164 | 189 | 198 |
| 5 | 71,4 | 14,8 | 12,4 | 1,4 | 30,5 | 162 | 198,5 | 201,5 |
| 6 | 61,6 | 17,7 | 20,7 | — | 25 | 280 | 294 | 294 |

0 001 816

Es zeigt sich, daß der Werkstoff bei Lagerung bei Zimmertemperatur bereits nach einem Tag nahezu seine Endfestigkeit erreicht hat. Die Festigkeitszunahmen nach 7 bzw. 28 Tagen Lagerzeit sind nur noch geringfügig.

**Patentansprüche**

1. Aushärtbares Magnesiazementgemisch aus Magnesiumoxid, Magnesiumchlorid, Wasser und Kohlenbergen, dadurch gekennzeichnet, daß als Kohlenberge gebrochene Wasch- und/oder Ortsberge in einer Menge von 50 bis 90 Gew.-% vorgesehen sind, daß der Anteil der Wasch- und/oder Ortsberge mindestens 5 Gew.-% mehlfeines Korn mit einer Korngröße unter 0,09 mm aufweist, daß die Magnesiumchloridlösung eine Dichte von über 1,22 g/cm$^3$ aufweist, daß der Anteil der Magnesiumchloridlösung zwischen 5 und 25 Gew.-% und der Anteil des Magnesiumoxids ebenfalls zwischen 5 und 25 Gew.-% beträgt.

2. Magnesiazementgemisch nach Anspruch 1, dadurch gekennzeichnet, daß das Gemisch zusätzlich bis zu 10 Gew.-% Bentonit enthält.

3. Magnesiazementgemisch nach Anspruch 1 oder 2, dadurch gekennzeichnet, daß anstelle von reinem Magnesiumoxid technisch gebrannter Magnesit oder ein Gemisch beider MgO—Qualitäten zur Anwendung kommt.

4. Verfahren zur Herstellung eins Magnesiazementgemisches nach einem der Ansprüche 1 bis 3, dadurch gekennzeichnet, daß die Wasch- und/oder Ortsberge am Anwendungsort aufbereitet und dort der Dispersion zugesetzt werden.

5. Verfahren nach Anspruch 4, dadurch gekennzeichnet, daß zur Herstellung des Magnesiazements die Dispersion aus Magnesiumchlorid-Lösung, Magnesiumoxid und ggf. Bentonit einem Blasgut aus aufbereiteten Wasch- und/oder Ortsbergen in der Blasleitung oder am Blasrohr zugesetzt wird.

**Claims**

1. A hardenable magnesia cement mixture consisting of magnesium oxide, magnesium chloride, water and coal waste, characterised in that crushed washing and/or local waste in an amount of 50 to 90% by weight are used as the coal waste, that the washing and/or local waste component contains at least 5% by weight of particles which are as fine as flour and have a size of less than 0.09 mm, that the magnesium chloride solution has a density of above 1.22 g/cm$^3$, that the amount of the magnesium chloride solution lies between 5 and 25% by weight and the amount of the magnesium oxide also lies between 5 and 25% by weight.

2. A magnesia cement mixture as claimed in Claim 1, characterised in that the mixture also contains up to 10% by weight of bentonite.

3. A magnesia cement mixture as claimed in Claim 1 or Claim 2, characterised in that in place of pure magnesium oxide, technical quality calcines magnesite, or a mixture of MgO of both qualities is used.

4. A process for the production of a magnesia cement mixture as claimed in one of Claims 1 to 3, characterised in that the washing and/or local waste is prepared at the place of use and added to the dispersion there.

5. A process as claimed in Claim 4, characterised in that, in order to produce the magnesia cement, the dispersion of the magnesium chloride solution, magnesium oxide, and possibly bentonite, is added to a material to be blown, which consists of prepared washing and/or local waste, in the blast conduit or at the blast pipe.

**Revendications**

1. Ciment magnésien composé d'oxyde de magnésium, de chlorure de magnésium, d'eau et de roches de gisement minier, caractérisé en ce que la roche de gisement est constituée par des déchets de lavage et/ou d'abattage, broyés, en proportion de 50 à 90% en poids, cette fraction de déchets comprenant au moins 5% en poids de grains à monture fine de grosseur inférieure à 0,09 millimètres, la solution de chlorure de magnésium ayant une densité supérieure à 1,22 g/cm$^3$, la fraction de solution de chlorure de magnésium utilisée étant dans une proportion comprise entre 5 et 25% en poids et l'oxyde de magnésium étant contenu dans cette même proportion.

2. Ciment magnésien suivant la revendication 1, caractérisé en ce que le mélange contient en plus jusqu'à 10% en poids de bentonite.

3. Ciment magnésien suivant l'une des revendications 1 ou 2, caractérisé en ce que, au lieu d'oxyde de magnésium pur, on utilise de la magnésite techniquement grillée, ou un mélange de ces deux sortes d'oxyde de magnésium.

4. Procédé pour la préparation d'un mélange de ciment magnésien suivant l'une quelconque des revendications 1 à 3, caractérisé en ce que les stériles de lavage et/ou les roches de gisement sont traités et préparés sur le lieu d'emploi, et sont ajoutés sur place à la dispersion constituant le ciment.

5. Procédé suivant la revendication 4, caractérisé en ce que, pour la préparation du ciment magnésien, la dispersion composée de solution de chlorure de magnésium, d'oxyde de magnésium, et éventuellement de bentonite, est ajoutée dans la conduite d'injection ou sur le tuyau d'injection préalablement préparé, constitué par les stériles de lavage et/ou des roches d'abattage.